# EUROPEAN PATENT SPECIFICATION

(11) **EP 2 685 608 B1**
(45) Date of publication and mention of the grant of the patent: **03.10.2018**
(21) Application number: 13183103.4
(22) Date of filing: 09.12.2002
(51) Int. Cl.: H02K 3/28, H02K 19/22

(54) **Armature winding for a dynamoelectric machine**
Ankerwicklung für eine dynamoelektrische Maschine
Enroulement d'induit d'une machine dynamoélectrique

(30) Priority: 11.12.2001 JP 2001376916
(43) Date of publication of application: 15.01.2014
(62) Divisional of application: 02027546.7
(73) Proprietor: MITSUBISHI DENKI KABUSHIKI KAISHA, Chiyoda-ku, Tokyo 100-8310 (JP)
(72) Inventor: Nishimura, Shinji, Tokyo 100-8310 (JP); Asao, Yoshihito, Tokyo 100-8310 (JP)
(74) Representative: Hoffmann Eitle

(56) References cited:
- US-A- 4 161 680

## Description

### BACKGROUND OF THE INVENTION

### 1. Field of the Invention

The present invention relates to a dynamoelectric machine capable of serving, for example, as an alternator or an electric starter motor mounted to an automobile, etc.

### 2. Description of the Related Art

Conventionally, alternators mounted to automobiles, etc., are known which have a charging generator composed of a star-connected three-phase armature winding, three-phase alternating current output therefrom being converted to direct-current output by means of a three-phase full-wave rectifier circuit constituted by diodes, etc., as described in Japanese Patent Examined Publication No. SHO 44-4451, for example, and effectively extracting third harmonic components from a neutral point of the three-phase armature winding by means of a rectifier for increased output in particular is also known.

However, in conventional three-phase alternators of this kind, when the distance between output terminals of the rectifier and a storage battery is great and wiring resistance in the cables for the wiring thereof is large, rectified ripple voltages in the rectified output terminal voltage increase with electric load. In constructions for obtaining high output by connecting a rectifier to the neutral point of the three-phase armature winding in particular, these ripple voltages in the rectified output increase dramatically when the rotational frequency of the alternator reaches a vicinity of approximately 2,000 to 3,000 rpm.

Increases of this kind in the ripple voltage of the rectified output give rise to increases in radio noise and have adverse effects on electrical components, and in addition, resonance occurs at rotational frequencies of the engine at which resonance points of the housing of the motor and the frequencies of these ripple voltages generally match, giving rise to phenomena which subject the driver to unpleasant sensations.

In order to solve problems of this kind, it has been proposed in Japanese Patent Examined Publication No. HEI 4-77546, for example, that rectification ripples be reduced by constituting the armature winding by a star-connected five-phase armature winding and constituting the rectifier by a five-phase full-wave rectifier.

According to Japanese Patent Examined Publication No. HEI 4-77546, it is claimed that because ripple factor can be reduced compared to alternators adopting star-connected three-phase armature windings by adopting the star-connected five-phase armature winding, rectified ripple voltages are reduced, reducing adverse effects on the electric load of a vehicle, and also enabling increased output.

Because this conventional alternator is constructed into a five-phase armature winding by star-connecting five winding phase portions, electric current must flow through two winding portions connected in series. Thus, one problem has been that impedance in the armature is large, limiting electric power generation.

Because it is necessary to bundle end portions of the five winding phase portions and connect them by soldering to form a neutral point, another problem has been that connection of the neutral point is complicated, making assembly of the armature (or stator) difficult. And if, for example, each of the winding phase portions is constructed by connecting two winding sub-portions in parallel, end portions of ten winding sub-portions must be connected together to form the neutral point, making the operation for connecting the neutral point extremely difficult, and there has even been a risk that a star connection could not be formed. Because the connection portion of the neutral point is constructed by connecting the end portions of a large number of winding sub-portions, the connection portion is increased in size. Because this connection portion projects beyond coil ends, other problems have been that the overall height of the coil ends is increased, giving rise to increased ventilation resistance, in turn reducing the quantity of cooling airflow generated by fans, thereby making cooling poor, and that the connection portion gives rise to irregularities on the coil ends, increasing wind noise.
A similar machine is described in US 4 161 680 A.

### SUMMARY OF THE INVENTION

The present invention aims to solve the above problems and an object of the present invention is to provide a dynamoelectric machine enabling electric power generation to be increased while maintaining a low rectified ripple voltage, and enabling assembly of a stator to be improved and deterioration of cooling and worsening of wind noise to be suppressed while making a neutral point unnecessary by constructing a five-phase armature winding by connecting five winding phase portions into an annular shape (a ring connection) so as to have a phase difference corresponding to an electrical angle of 72 degrees.

Another object of the present invention is to provide a dynamoelectric machine enabling operation up to and at high-speed rotation, enabling assembly of a stator to be improved and deterioration of cooling and worsening of wind noise to be suppressed while making a neutral point unnecessary by constructing a five-phase armature winding by connecting five winding phase portions into an annular shape (a ring connection) so as to have a phase difference corresponding to an electrical angle of 72 degrees and supplying a five-phase alternating voltage to the armature winding by means of a five-phase inverter.

With the above object in view, the dynamoelectric machine includes the features of claims 1 or 2 and in particular a stator core in which a predetermined number of slots defined by adjacent pairs of teeth are arranged in a circumferential direction, an armature winding installed in the stator core, a predetermined number of field poles, and a rectifier for rectifying alternating-current output induced in the armature winding in response to a rotating magnetic field rotating in synchrony with rotation of an internal combustion engine. The dynamoelectric machine charges a storage battery using the rectified output from the rectifier. The armature winding is constructed by connecting five winding phase portions into an annular shape such that electrical angular phases of electromotive force differ from each other by approximately 72 degrees. Further, the rectifier is constituted by a five-phase full-wave rectifier.

Therefore, the dynamoelectric machine is able to increase electric power generation while maintaining a low rectified ripple voltage, and is able to improve assembly of the stator and suppress deterioration of cooling and worsening of wind noise while making a neutral point unnecessary.

With the above object in view, the dynamoelectric machine particularly includes a stator core in which a predetermined number of slots defined by adjacent pairs of teeth are arranged in a circumferential direction, an armature winding installed in the stator core, a predetermined number of field poles, and a five-phase inverter for supplying a five-phase alternating voltage to the armature winding from a direct-current power source. The armature winding is constructed by connecting five winding phase portions into an annular shape such that electrical angular phases of electromotive force differ from each other by approximately 72 degrees.

Therefore, the dynamoelectric machine is able to increase electric power generation while maintaining a low rectified ripple voltage, is able to improve assembly of the stator and suppress deterioration of cooling and worsening of wind noise while making a neutral point unnecessary, and enables motor operation up to and at high speeds.

### BRIEF DESCRIPTION OF THE DRAWINGS

Figure 1 is a longitudinal section showing a construction of a dynamoelectric machine according to Embodiment 1 useful for understanding the invention;
Figure 2 is a circuit diagram of the dynamoelectric machine according to Embodiment 1;
Figure 3 is a development explaining a construction of an armature winding in the dynamoelectric machine according to Embodiment 1 ;
Figure 4 is a graph showing a relationship between rotational frequency and electric power generation in the dynamoelectric machine according to Embodiment 1;
Figure 5 is a graph showing phase currents flowing through winding phase portions of the armature winding during operation of the dynamoelectric machine according to Embodiment 1;
Figure 6 is a graph showing phase currents flowing through winding phase portions of an armature winding during operation of a comparative dynamoelectric machine;
Figure 7 is a development explaining a construction of the armature winding in the comparative dynamoelectric machine;
Figure 8 is a circuit diagram of the comparative dynamoelectric machine;
Figure 9 is a development explaining a construction of an armature winding in a dynamoelectric machine according to Embodiment 2 useful for understanding the invention;
Figure 10 is a development explaining a construction of an armature winding in a dynamoelectric machine according to Embodiment 3 useful for understanding the invention;
Figure 11 is a development explaining a construction of an armature winding in a dynamoelectric machine according to Embodiment 4 useful for understanding the invention;
Figure 12 is a stator end elevation explaining a construction of an armature winding in a dynamoelectric machine according to Embodiment 5 of the present invention;
Figure 13 is a circuit diagram of a dynamoelectric machine according to Embodiment 6 useful for understanding the invention;
Figure 14 is a diagram showing timing of switching on and off of transistors in square wave operation having an energization angle of 72 degrees;
Figure 15 is a diagram explaining flow of electric current through an armature winding of the dynamoelectric machine at time X in Figure 14;
Figure 16 is a diagram showing timing of switching on and off of transistors in square wave operation having an energization angle of 144 degrees;
Figure 17 is a diagram explaining flow of electric current through the armature winding of the dynamoelectric machine at time X in Figure 16;
Figure 18 is a diagram showing timing of switching on and off of transistors in square wave operation having an energization angle of 180 degrees; and
Figure 19 is a diagram explaining flow of electric current through the armature winding of the dynamoelectric machine at time X in Figure 18. DETAILED DESCRIPTION OF THE

### PREFERRED EMBODIMENT

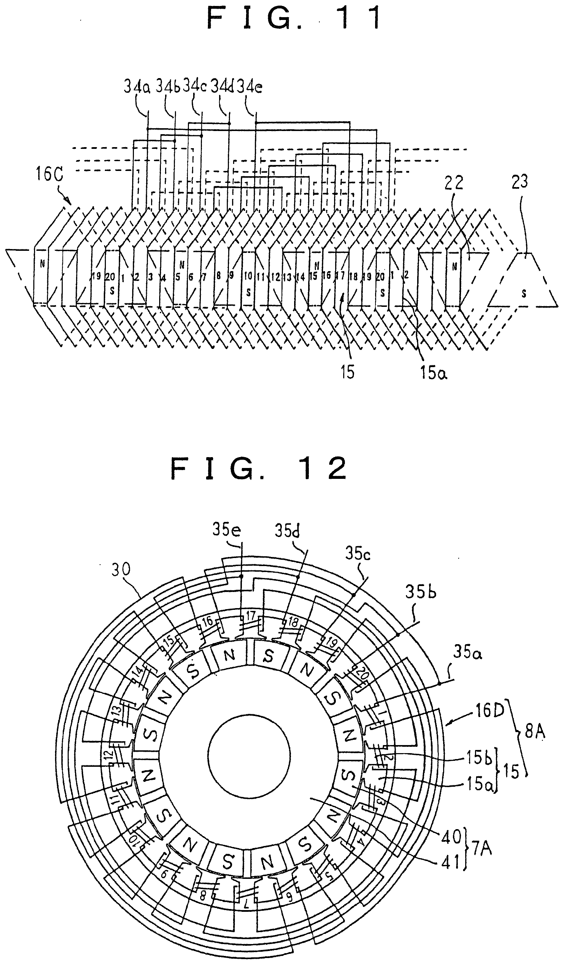

A preferred embodiment of the present invention will now be explained with reference to Figure 12. All other embodiments are examples useful for understanding the invention.

### Embodiment 1

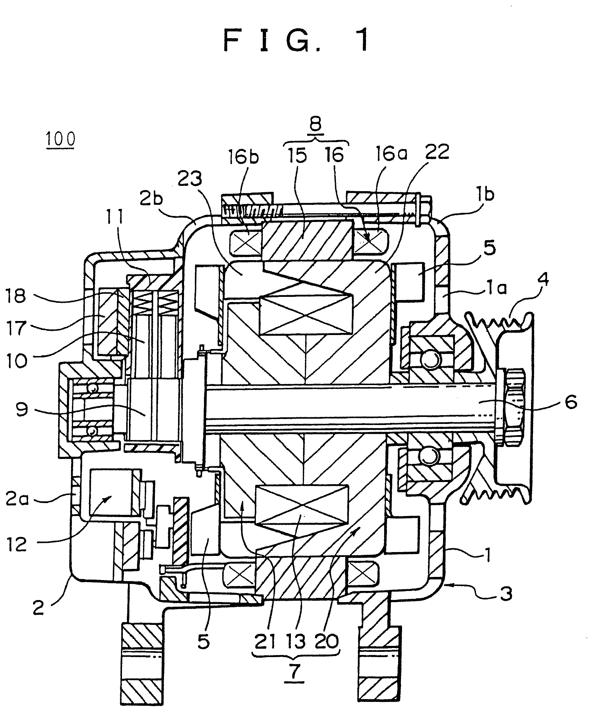

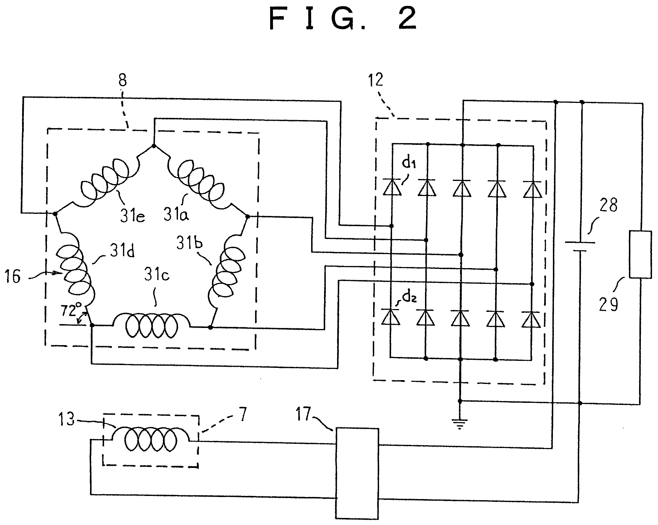

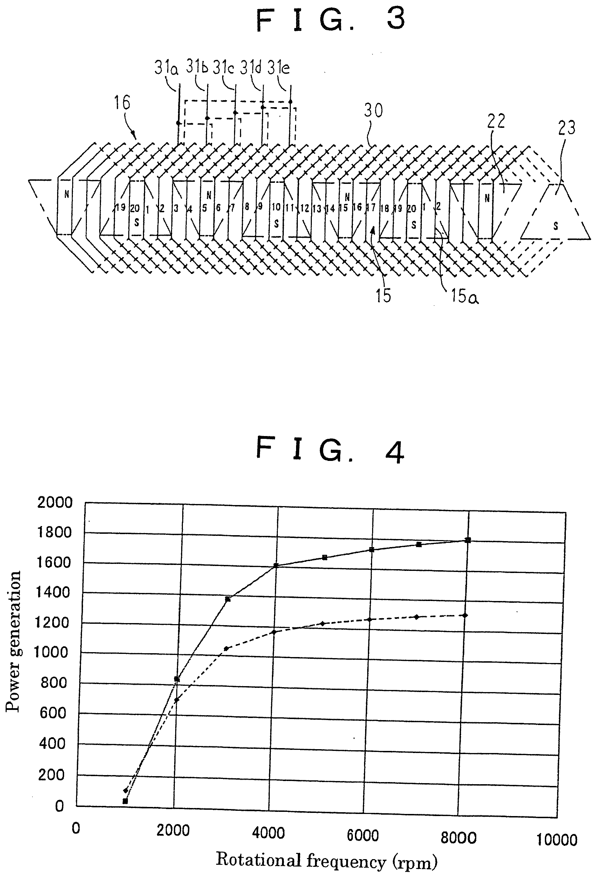

Figure 1 is a longitudinal section showing a construction of a dynamoelectric machine according to Embodiment 1, Figure 2 is a circuit diagram of the dynamoelectric machine according to Embodiment 1, and Figure 3 is a development explaining a construction of an armature winding in the dynamoelectric machine according to Embodiment 1.

In Figures 1 and 2, a dynamoelectric machine 100 operates as an alternator and is constructed by rotatably mounting a Lundell-type rotor 7 by means of a shaft 6 inside a case 3 constituted by a front bracket 1 and a rear bracket 2 made of aluminum and fixing a stator 8 to an inner wall surface of the case 3 so as to cover an outer circumferential side of the rotor 7.

The shaft 6 is rotatably supported in the front bracket 1 and the rear bracket 2. A pulley 4 is fixed to a first end of this shaft 6, enabling rotational torque from an engine to be transmitted to the shaft 6 by means of a belt (not shown).

Slip rings 9 for supplying an electric current to the rotor 7 are fixed to a second end portion of the shaft 6, a pair of brushes 10 being housed in a brush holder 11 disposed inside the case 3 so as to slide in contact with these slip rings 9. A voltage regulator 18 for adjusting the magnitude of an alternating voltage generated in the stator 8 is fixed by adhesive to a heat sink 17 fitted into the brush holder 11.

A rectifier 12 for converting alternating current generated in the stator 8 into direct current is mounted inside the case 3, the rectifier 12 being constituted by a five-phase full-wave rectifier in which five diode pairs are connected in parallel, each diode pair being composed of a positive-side diode d₁ and a negative-side diode d₂ connected in series.

The rotor 7 is constituted by: a field winding 13 for generating a magnetic flux on passage of an electric current; and a pair of first and second pole cores 20 and 21 disposed so as to cover the field winding 13, magnetic poles being formed in the first and second pole cores 20 and 21 by the magnetic flux generated by the field winding 13. The first and second pole cores 20 and 21 are made of iron, each having two first and second claw-shaped magnetic poles 22 and 23, respectively, disposed on an outer circumferential edge at a uniform angular pitch in a circumferential direction so as to project axially, and the first and second pole cores 20 and 21 are fixed to the shaft 6 facing each other such that the first and second claw-shaped magnetic poles 22 and 23 intermesh. Moreover, the first and second claw-shaped magnetic poles 22 and 23 correspond to field poles.

The stator 8 is provided with: a stator core 15; and an armature winding 16 installed in the stator core 15. This armature winding 16 is constructed into a five-phase armature winding by connecting five winding phase portions 31a to 31e, including an a-phase winding phase portion 31a, a b-phase winding phase portion 31b, a c-phase winding phase portion 31c, a d-phase winding phase portion 31d, and an e-phase winding phase portion 31e, into an annular shape (a ring connection) so as to have a phase difference corresponding to an electrical angle of 72 degrees from each other. Connection portions between each pair of adjacent winding phase portions are connected to respective connection portions between a positive-side diode d₁ and a negative-side diode d₂.

Fans 5 (internal fans) are fixed to first and second axial ends of the rotor 7. Front-end and rear-end air intake apertures 1a and 2a are disposed in axial end surfaces of the front bracket 1 and the rear bracket 2, and front-end and rear-end air discharge apertures 1b and 2b are disposed in first and second outer circumferential shoulder portions of the front bracket 1 and the rear bracket 2 radially outside front-end and rear-end coil end groups 16a and 16b of the armature winding 16.

Output from the rectifier 12 can be supplied to a storage battery 28 and an electric load 29.

Next, a winding construction of the armature winding 16 will be explained with reference to Figure 3.

The stator core 15 is prepared into a cylindrical laminated core in which twenty slots 15a extending in an axial direction are formed at a predetermined pitch in a circumferential direction. Here, two each of the first and second claw-shaped magnetic poles 22 and 23 functioning as field poles are formed. Thus, twenty slots 15a are formed relative to four field poles, making the number of slots per pole five, the slots 15a being arranged at a pitch corresponding to an electrical angle of 36 degrees. Moreover, 1 to 20 in Figure 3 indicate slot numbers.

A conducting wire 30 composed of a copper wire having a circular cross section coated with an electrical insulator is wound for four turns into an annular shape so as to pass through Slot Numbers 1 and 6 of the slots 15a, then wound for four turns into an annular shape so as to pass through Slot Numbers 6 and 11 of the slots 15a, then wound for four turns into an annular shape so as to pass through Slot Numbers 11 and 16 of the slots 15a, and finally wound for four turns into an annular shape so as to pass through Slot Numbers 16 and 1 of the slots 15a to constitute the a-phase winding phase portion 31a.

A conducting wire 30 is wound for four turns into an annular shape so as to pass through Slot Numbers 3 and 8 of the slots 15a, then wound for four turns into an annular shape so as to pass through Slot Numbers 8 and 13 of the slots 15a, then wound for four turns into an annular shape so as to pass through Slot Numbers 13 and 18 of the slots 15a, and finally wound for four turns into an annular shape so as to pass through Slot Numbers 18 and 3 of the slots 15a to constitute the b-phase winding phase portion 31b.

A conducting wire 30 is wound for four turns into an annular shape so as to pass through Slot Numbers 5 and 10 of the slots 15a, then wound for four turns into an annular shape so as to pass through Slot Numbers 10 and 15 of the slots 15a, then wound for four turns into an annular shape so as to pass through Slot Numbers 15 and 20 of the slots 15a, and finally wound for four turns into an annular shape so as to pass through Slot Numbers 20 and 5 of the slots 15a to constitute the c-phase winding phase portion 31c.

A conducting wire 30 is wound for four turns into an annular shape so as to pass through Slot Numbers 7 and 12 of the slots 15a, then wound for four turns into an annular shape so as to pass through Slot Numbers 12 and 17 of the slots 15a, then wound for four turns into an annular shape so as to pass through Slot Numbers 17 and 2 of the slots 15a, and finally wound for four turns into an annular shape so as to pass through Slot Numbers 2 and 7 of the slots 15a to constitute the d-phase winding phase portion 31d.

A conducting wire 30 is wound for four turns into an annular shape so as to pass through Slot Numbers 9 and 14 of the slots 15a, then wound for four turns into an annular shape so as to pass through Slot Numbers 14 and 19 of the slots 15a, then wound for four turns into an annular shape so as to pass through Slot Numbers 19 and 4 of the slots 15a, and finally wound for four turns into an annular shape so as to pass through Slot Numbers 4 and 9 of the slots 15a to constitute the e-phase winding phase portion 31e.

The a-phase winding phase portion 31a, the b-phase winding phase portion 31b, the c-phase winding phase portion 31c, the d-phase winding phase portion 31d, and the e-phase winding phase portion 31e installed in this manner each form a lap winding having four turns and have a phase difference corresponding to an electrical angle of 72 degrees from each other.

A winding start end of the a-phase winding phase portion 31a and a winding finish end of the b-phase winding phase portion 31b are fixed to a mounting terminal of the rectifier 12 by a mounting screw, etc., so as to be electrically connected to a connection portion between a positive-side diode d₁ and a negative-side diode d₂ of the rectifier 12. Similarly, a winding start end of the b-phase winding phase portion 31b and a winding finish end of the c-phase winding phase portion 31c, a winding start end of the c-phase winding phase portion 31c and a winding finish end of the d-phase winding phase portion 31d, a winding start end of the d-phase winding phase portion 31d and a winding finish end of the e-phase winding phase portion 31e, and a winding start end of the e-phase winding phase portion 31e and a winding finish end of the a-phase winding phase portion 31a are each fixed to a mounting terminal of the rectifier 12 by a mounting screw, etc., so as to be electrically connected to a connection portion between a positive-side diode d₁ and a negative-side diode d₂ of the rectifier 12. Thus, the armature winding 16 is constructed in which the a-phase winding phase portion 31a, the b-phase winding phase portion 31b, the c-phase winding phase portion 31c, the d-phase winding phase portion 31d, and the e-phase winding phase portion 31e are connected into an annular shape (a ring connection) so as to have a phase difference corresponding to an electrical angle of 72 degrees from each other.

In the dynamoelectric machine 100 constructed in this manner, an electric current is supplied to the field winding 13 from the storage battery 28 through the brushes 10 and the slip rings 9, generating a magnetic flux. The first claw-shaped magnetic poles 22 of the first pole core 20 are magnetized into North-seeking (N) poles by this magnetic flux, and the second claw-shaped magnetic poles 23 of the second pole core 21 are magnetized into South-seeking (S) poles. At the same time, rotational torque from the engine is transmitted to the shaft 6 by means of the belt (not shown) and the pulley 4, rotating the rotor 7. Thus, a rotating magnetic field is imparted to the armature winding 16, generating an electromotive force in the armature winding 16. This alternating-current electromotive force passes through the rectifier 12 and is converted into direct current, the magnitude thereof is adjusted by the voltage regulator 18, the storage battery 28 is charged, and the current is supplied to the electrical load 29.

At the rear end, external air is drawn in due to rotation of the fans 5 through the rear-end air intake apertures 2a which are disposed opposite a heat sink on the rectifier 12 and the heat sink 17 of the voltage regulator 18, etc., flows along the axis of the shaft 6, cooling the rectifier 12 and the voltage regulator 18, is then deflected centrifugally by the fans 5, cooling the rear-end coil end group 16b of the armature winding 16, and is discharged outside through the rear-end air discharge apertures 2b. At the same time, at the front end, external air is drawn in axially through the front-end air intake apertures 1a due to rotation of the fans 5, is then deflected centrifugally by the fans 5, cooling the front-end coil end group 16a of the armature winding 16, and is discharged outside through the front-end air discharge apertures 1b.

Now, in this dynamoelectric machine 100, when the rotational frequency is low, maximum electromotive force is generated by two winding phase portions connected in series among the five ring-connected winding phase portions (the a-phase winding phase portion 31a to the e-phase winding phase portion 31e), and power is generated using this maximum electromotive force. Here, the electromotive force between the conductor wires is 1.618 (= 2 x sin(54 degrees)) times the electromotive force in a single winding phase portion. The generated electric current passes from a ground (or earth) terminal, through a negative-side diode d₂ of the rectifier 12, passes through two winding phase portions connected in series or three winding phase portions connected in series, passes through a positive-side diode d₁, and charges the storage battery 28.

When the rotational frequency is high, it is also possible to charge the storage battery 28 with the electromotive force of a single winding phase portion. Thus, generated electric currents coexist on a pathway from the ground terminal, through a negative-side diode d₂ of the rectifier 12, through a single winding phase portion, and through a positive-side diode d₁ to charge the storage battery 28, and on a pathway from the ground terminal, through a negative-side diode d₂, through two winding phase portions connected in series, and through a positive-side diode d₁ to charge the storage battery 28. In the case of the electric current pathway passing through only a single winding phase portion, impedance in the windings is small compared to the electric current pathway passing through two winding phase portions connected in series, enabling more electric current to pass.

Consequently, according to Embodiment 1, electric power generation is reduced when the rotational frequency is low because the electromotive force between the conductor wires is 1.618 times the electromotive force in a single winding phase portion and is small compared to that of a five-phase star connection (1.902 times). However, when the rotational frequency is high, because the electric current pathway passing through only a single winding phase portion and the electric current pathway passing through two winding phase portions connected in series coexist, impedance in the windings is small compared to a five-phase star winding having only one electric current pathway passing through two winding phase portions connected in series, enabling more electric current to pass, thereby enabling electric power generation to be increased.

Because this armature winding 16 is constructed by connecting the five winding phase portions 31a to 31e into an annular shape, third harmonic components in the electric current are reduced compared to cases where an armature winding is constructed by star-connecting three winding phase portions, enabling electromagnetic noise to be reduced, and direct-current output current is greater, improving efficiency.

Moreover, in this dynamoelectric machine 100, because ripple factor can also be reduced compared to alternators adopting star-connected three-phase armature windings in a similar manner to alternators adopting conventional star-connected five-phase armature windings, rectified ripple voltages are reduced, reducing adverse effects on the electric load of a vehicle, and also enabling increased output.

Because the armature winding 16 is constructed by connecting five winding phase portions into an annular shape, the neutral-point connection operation performed when constructing an armature winding by star-connecting, in which winding finish ends of five winding phase portions are gathered and connected, is no longer necessary, improving stator assembly.

Even if, for example, each of the winding phase portions is constructed by connecting two winding sub-portions in parallel, the five-phase armature winding can be constructed simply, because it is not necessary to form a neutral point by connecting together end portions of ten winding sub-portions at the same time.

Furthermore, increases in the overall height of the coil ends and irregularities in the coil ends resulting from the voluminous neutral-point connection portion are eliminated, suppressing reductions in the quantity of cooling airflow from the fans 5 and increases in wind noise.

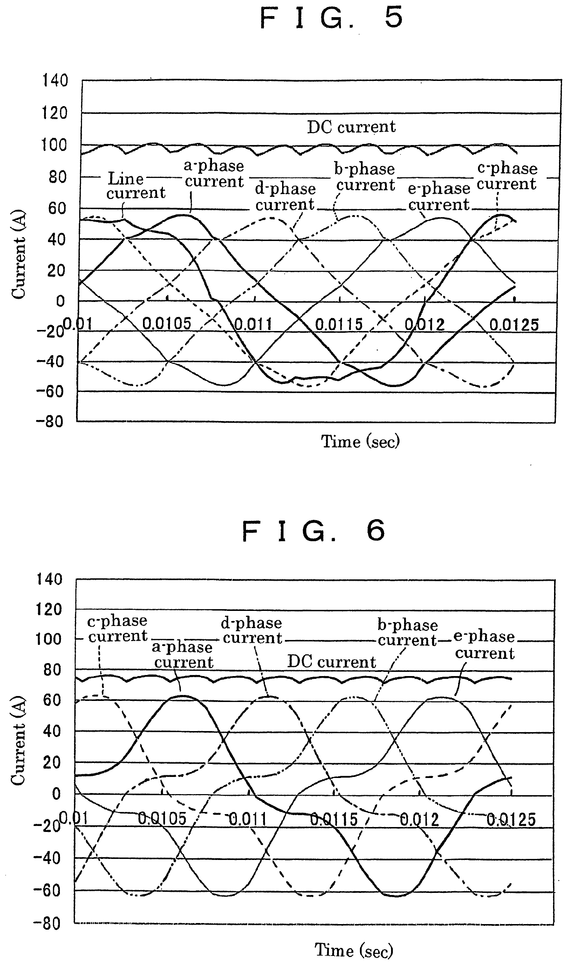

Next, results obtained by operating this inventive dynamoelectric machine 100 and measuring electric power generation are shown in Figure 4. Moreover, in Figure 4, a solid fine indicates electric power generation by the inventive dynamoelectric machine 100, and a broken line indicates electric power generation by a dynamoelectric machine functioning as a comparative example to which a comparative armature winding 60 constructed by star-connecting five winding phase portions 31a to 31e is mounted instead of the inventive armature winding 16. The electric current flowing through the five winding phase portions 31a to 31e in the inventive dynamoelectric machine 100 is shown in Figure 5, and the electric current flowing through the five winding phase portions 31a to 31e in the dynamoelectric machine functioning as a comparative example is shown in Figure 6. In Figure 6, the line current is omitted because it is equivalent to the electric current flowing through each of the winding phase portions.

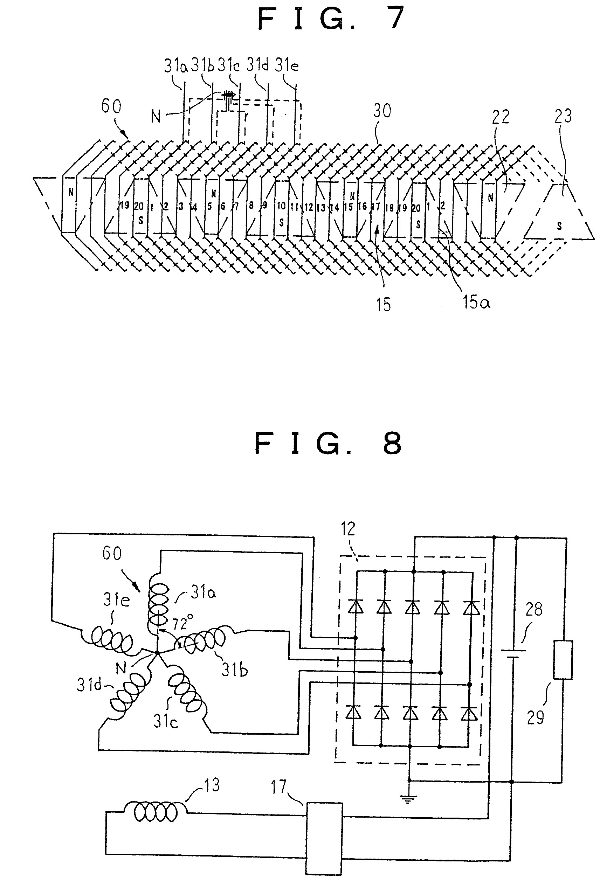

First, the armature winding 60 used in the dynamoelectric machine functioning as a comparative example, as shown in Figure 7, is constructed into a five-phase star connection in which an a-phase winding phase portion 31a, a b-phase winding phase portion 31b, a c-phase winding phase portion 31c, a d-phase winding phase portion 31d, and an e-phase winding phase portion 31e are star-connected so as to have a phase difference corresponding to an electrical angle of 72 degrees from each other by gathering together the winding finish ends of the a-phase winding phase portion 31a, the b-phase winding phase portion 31b, the c-phase winding phase portion 31c, the d-phase winding phase portion 31d and the e-phase winding phase portion 31e and joining them together by soldering. Moreover, the a-phase winding phase portion 31a, the b-phase winding phase portion 31b, the c-phase winding phase portion 31c, the d-phase winding phase portion 31d, and the e-phase winding phase portion 31e are installed in the stator core 15 in a similar manner to Embodiment 1. The joint portion in which the winding finish ends of the a-phase winding phase portion 31a, the b-phase winding phase portion 31b, the c-phase winding phase portion 31c, the d-phase winding phase portion 31d and the e-phase winding phase portion 31e are gathered and joined together forms a neutral point N.

In the dynamoelectric machine functioning as a comparative example, as shown in Figure 8, the winding start ends of the a-phase winding phase portion 31a, the b-phase winding phase portion 31b, the c-phase winding phase portion 31c, the d-phase winding phase portion 31d and the e-phase winding phase portion 31e are output wires and are electrically connected to connection portions between the positive-side diodes d₁ and the negative-side diodes d₂ of the rectifier 12 by fixing each to the respective mounting terminals of the rectifier 12 by mounting screws.

In this dynamoelectric machine functioning as a comparative example, maximum electromotive force is generated by two winding phase portions connected in series having a phase difference corresponding to an electrical angle of 144 degrees among the five star-connected winding phase portions 31a to 31e, the a-phase winding phase portion 31a and the c-phase winding phase portion 31c, for example, and power is generated using this maximum electromotive force. Here, the electromotive force between the conductor wires is 1.902 (= 2 x sin(72 degrees)) times the electromotive force in a single winding phase portion. The generated electric current flows through the two winding phase portions connected in series.

From Figure 4, it can be seen that electric power generation becomes greater in the inventive dynamoelectric machine 100 than that of the dynamoelectric machine functioning as a comparative example above approximately 1,000 rpm.

In other words, at equal to or less than approximately 1,000 rpm, electric power generation by the inventive dynamoelectric machine 100 is reduced compared to the comparative example because the electromotive force between the conductor wires in the inventive armature winding 16 is 1.618 (= 2 x sin(54 degrees)) times the electromotive force in a single winding phase portion and is small compared to that of the comparative armature winding 60 (1.902 times). However, above approximately 1,000 rpm, because the generated current pathway passing through only a single winding phase portion and the generated current pathway passing through two winding phase portions connected in series coexist in the inventive armature winding 16, impedance in the windings is small compared to the comparative armature winding 60 in which the generated current passes only through two winding phase portions connected in series, enabling electric power generation by the inventive dynamoelectric machine 100 to be increased compared to the comparative example.

From Figures 5 and 6, it can be seen that basic waveforms of the electric currents flowing through each of the winding phase portions 31a to 31e are equivalent, and that the direct-current output current (DC current) in the inventive dynamoelectric machine 100 is greater than that of the comparative example.

Because the electric current flowing through the windings themselves is the same, copper loss is also the same. On the other hand, the direct-current output current is large in the inventive dynamoelectric machine 100 compared to the comparative example. Thus, the inventive dynamoelectric machine 100 is more efficient than the comparative example.

### Embodiment 2

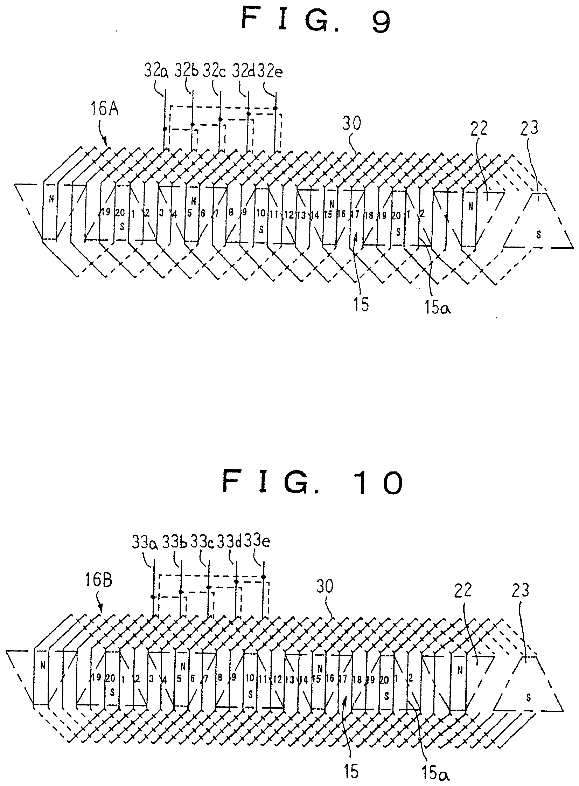

Figure 9 is a development explaining a construction of an armature winding in a dynamoelectric machine according to Embodiment 2.

In Figure 9, an a-phase winding phase portion 32a is constructed by winding a conducting wire 30 for eight turns so as to pass through Slot Numbers 1 and 6 of the slots 15a, then winding the conducting wire 30 for eight turns so as to pass through Slot Numbers 11 and 16 of the slots 15a.

A b-phase winding phase portion 32b is constructed by winding a conducting wire 30 for eight turns so as to pass through Slot Numbers 3 and 8 of the slots 15a, then winding the conducting wire 30 for eight turns so as to pass through Slot Numbers 13 and 18 of the slots 15a.

A c-phase winding phase portion 32c is constructed by winding a conducting wire 30 for eight turns so as to pass through Slot Numbers 5 and 10 of the slots 15a, then winding the conducting wire 30 for eight turns so as to pass through Slot Numbers 15 and 20 of the slots 15a.

A d-phase winding phase portion 32d is constructed by winding a conducting wire 30 for eight turns so as to pass through Slot Numbers 7 and 12 of the slots 15a, then winding the conducting wire 30 for eight turns so as to pass through Slot Numbers 17 and 2 of the slots 15a.

An e-phase winding phase portion 32e is constructed by winding a conducting wire 30 for eight turns so as to pass through Slot Numbers 9 and 14 of the slots 15a, then winding the conducting wire 30 for eight turns so as to pass through Slot Numbers 19 and 4 of the slots 15a.

The a-phase winding phase portion 32a, the b-phase winding phase portion 32b, the c-phase winding phase portion 32c, the d-phase winding phase portion 32d, and the e-phase winding phase portion 32e installed in this manner each form a lap winding having eight turns and have a phase difference corresponding to an electrical angle of 72 degrees from each other.

Although not shown, a winding start end of the a-phase winding phase portion 32a and a winding finish end of the b-phase winding phase portion 32b are fixed to a mounting terminal of the rectifier 12 by a mounting screw, etc., so as to be electrically connected to a connection portion between a positive-side diode d₁ and a negative-side diode d₂ of the rectifier 12. Similarly, a winding start end of the b-phase winding phase portion 32b and a winding finish end of the c-phase winding phase portion 32c, a winding start end of the c-phase winding phase portion 32c and a winding finish end of the d-phase winding phase portion 32d, a winding start end of the d-phase winding phase portion 32d and a winding finish end of the e-phase winding phase portion 32e, and a winding start end of the e-phase winding phase portion 32e and a winding finish end of the a-phase winding phase portion 32a are each fixed to a mounting terminal of the rectifier 12 by a mounting screw, etc., so as to be electrically connected to a connection portion between a positive-side diode d₁ and a negative-side diode d₂ of the rectifier 12. Thus, an armature winding 16A is constructed in which the a-phase winding phase portion 32a, the b-phase winding phase portion 32b, the c-phase winding phase portion 32c, the d-phase winding phase portion 32d, and the e-phase winding phase portion 32e are connected into an annular shape (a ring connection) so as to have a phase difference corresponding to an electrical angle of 72 degrees from each other.

Moreover, except for the fact that the armature winding 16A is used instead of the armature winding 16, Embodiment 2 is constructed in a similar manner to Embodiment 1 above.

Consequently, because the armature winding 16A is constructed by connecting the a-phase winding phase portion 32a, the b-phase winding phase portion 32b, the c-phase winding phase portion 32c, the d-phase winding phase portion 32d, and the e-phase winding phase portion 32e into an annular shape so as to have a phase difference corresponding to an electrical angle of 72 degrees from each other, similar effects to those in Embodiment 1 above can also be achieved in Embodiment 2.

### Embodiment 3

Figure 10 is a development explaining a construction of an armature winding in a dynamoelectric machine according to Embodiment 3.

In Figure 10, an a-phase winding phase portion 33a is constructed into a four-turn wave winding in each of Slot Numbers 1, 6, 11, and 16 of the slots 15a by winding a conducting wire 30 for one lap into a wave winding so as to alternately occupy Address 1 and Address 2, then winding the conducting wire 30 for one lap into a wave winding so as to alternately occupy Address 2 and Address 1, then winding the conducting wire 30 for one lap into a wave winding so as to alternately occupy Address 3 and Address 4, and finally winding the conducting wire 30 for one lap into a wave winding so as to alternately occupy Address 4 and Address 3. Here, Addresses 1 to 4 are housing positions of the conducting wire 30 in a slot depth direction inside each of the slots 15a. In other words, the conducting wire 30 is housed in four layers so as to line up in single rows in the slot depth direction inside each of the slots 15a, Address 1 corresponding to the innermost layer inside the slots 15a and Address 4 to the outermost layer inside the slots 15 a.

A b-phase winding phase portion 33b is constructed into a four-turn wave winding in each of Slot Numbers 3, 8, 13, and 18 of the slots 15a by winding a conducting wire 30 for one lap into a wave winding so as to alternately occupy Address 1 and Address 2, then winding the conducting wire 30 for one lap into a wave winding so as to alternately occupy Address 2 and Address 1, then winding the conducting wire 30 for one lap into a wave winding so as to alternately occupy Address 3 and Address 4, and finally winding the conducting wire 30 for one lap into a wave winding so as to alternately occupy Address 4 and Address 3.

A c-phase winding phase portion 33c is constructed into a four-turn wave winding in each of Slot Numbers 5, 10, 15, and 20 of the slots 15a by winding a conducting wire 30 for one lap into a wave winding so as to alternately occupy Address 1 and Address 2, then winding the conducting wire 30 for one lap into a wave winding so as to alternately occupy Address 2 and Address 1, then winding the conducting wire 30 for one lap into a wave winding so as to alternately occupy Address 3 and Address 4, and finally winding the conducting wire 30 for one lap into a wave winding so as to alternately occupy Address 4 and Address 3.

A d-phase winding phase portion 33d is constructed into a four-turn wave winding in each of Slot Numbers 7, 12, 17, and 2 of the slots 15a by winding a conducting wire 30 for one lap into a wave winding so as to alternately occupy Address 1 and Address 2, then winding the conducting wire 30 for one lap into a wave winding so as to alternately occupy Address 2 and Address 1, then winding the conducting wire 30 for one lap into a wave winding so as to alternately occupy Address 3 and Address 4, and finally winding the conducting wire 30 for one lap into a wave winding so as to alternately occupy Address 4 and Address 3.

An e-phase winding phase portion 33e is constructed into a four-turn wave winding in each of Slot Numbers 9, 14, 19, and 4 of the slots 15a by winding a conducting wire 30 for one lap into a wave winding so as to alternately occupy Address 1 and Address 2, then winding the conducting wire 30 for one lap into a wave winding so as to alternately occupy Address 2 and Address 1, then winding the conducting wire 30 for one lap into a wave winding so as to alternately occupy Address 3 and Address 4, and finally winding the conducting wire 30 for one lap into a wave winding so as to alternately occupy Address 4 and Address 3.

The a-phase winding phase portion 33a, the b-phase winding phase portion 33b, the c-phase winding phase portion 33c, the d-phase winding phase portion 33d, and the e-phase winding phase portion 33e installed in this manner have a phase difference corresponding to an electrical angle of 72 degrees from each other.

Although not shown, a winding start end of the a-phase winding phase portion 33a and a winding finish end of the b-phase winding phase portion 33b are fixed to a mounting terminal of the rectifier 12 by a mounting screw, etc., so as to be electrically connected to a connection portion between a positive-side diode d₁ and a negative-side diode d₂ of the rectifier 12. Similarly, a winding start end of the b-phase winding phase portion 33b and a winding finish end of the c-phase winding phase portion 33c, a winding start end of the c-phase winding phase portion 33c and a winding finish end of the d-phase winding phase portion 33d, a winding start end of the d-phase winding phase portion 33d and a winding finish end of the e-phase winding phase portion 33e, and a winding start end of the e-phase winding phase portion 33e and a winding finish end of the a-phase winding phase portion 33a are each fixed to a mounting terminal of the rectifier 12 by a mounting screw, etc., so as to be electrically connected to a connection portion between a positive-side diode d₁ and a negative-side diode d₂ of the rectifier 12. Thus, an armature winding 16B is constructed in which the a-phase winding phase portion 33a, the b-phase winding phase portion 33b, the c-phase winding phase portion 33c, the d-phase winding phase portion 33d, and the e-phase winding phase portion 33e are connected into an annular shape (a ring connection) so as to have a phase difference corresponding to an electrical angle of 72 degrees from each other.

Moreover, except for the fact that the armature winding 16B is used instead of the armature winding 16, Embodiment 3 is constructed in a similar manner to Embodiment 1 above.

Consequently, because the armature winding 16B is constructed by connecting the a-phase winding phase portion 33a, the b-phase winding phase portion 33b, the c-phase winding phase portion 33c, the d-phase winding phase portion 33d, and the e-phase winding phase portion 33e into an annular shape so as to have a phase difference corresponding to an electrical angle of 72 degrees from each other, similar effects to those in Embodiment 1 above can also be achieved in Embodiment 3.

### Embodiment 4

Figure 11 is a development explaining a construction of an armature winding in a dynamoelectric machine according to Embodiment 4.

In Figure 11, an a-phase winding phase portion 34a is constructed by winding a conducting wire 30 for four turns so as to pass through Slot Numbers 1 and 5 of the slots 15a, then winding the conducting wire 30 for four turns so as to pass through Slot Numbers 6 and 10 of the slots 15a, then winding the conducting wire 30 for four turns so as to pass through Slot Numbers 11 and 15 of the slots 15a, and finally winding the conducting wire 30 for four turns so as to pass through Slot Numbers 16 and 20 of the slots 15a.

A b-phase winding phase portion 34b is constructed by winding a conducting wire 30 for four turns so as to pass through Slot Numbers 3 and 7 of the slots 15a, then winding the conducting wire 30 for four turns so as to pass through Slot Numbers 8 and 12 of the slots 15a, then winding the conducting wire 30 for four turns so as to pass through Slot Numbers 13 and 17 of the slots 15a, and finally winding the conducting wire 30 for four turns so as to pass through Slot Numbers 18 and 2 of the slots 15a.

A c-phase winding phase portion 34c is constructed by winding a conducting wire 30 for four turns so as to pass through Slot Numbers 5 and 9 of the slots 15a, then winding the conducting wire 30 for four turns so as to pass through Slot Numbers 10 and 14 of the slots 15a, then winding the conducting wire 30 for four turns so as to pass through Slot Numbers 15 and 19 of the slots 15a, and finally winding the conducting wire 30 for four turns so as to pass through Slot Numbers 20 and 4 of the slots 15a.

A d-phase winding phase portion 34d is constructed by winding a conducting wire 30 for four turns so as to pass through Slot Numbers 7 and 11 of the slots 15a, then winding the conducting wire 30 for four turns so as to pass through Slot Numbers 12 and 16 of the slots 15a, then winding the conducting wire 30 for four turns so as to pass through Slot Numbers 17 and 1 of the slots 15a, and finally winding the conducting wire 30 for four turns so as to pass through Slot Numbers 2 and 6 of the slots 15a.

An e-phase winding phase portion 34e is constructed by winding a conducting wire 30 for four turns so as to pass through Slot Numbers 9 and 13 of the slots 15a, then winding the conducting wire 30 for four turns so as to pass through Slot Numbers 14 and 18 of the slots 15a, then winding the conducting wire 30 for four turns so as to pass through Slot Numbers 19 and 3 of the slots 15a, and finally winding the conducting wire 30 for four turns so as to pass through Slot Numbers 4 and 8 of the slots 15a.

The a-phase winding phase portion 34a, the b-phase winding phase portion 34b, the c-phase winding phase portion 34c, the d-phase winding phase portion 34d, and the e-phase winding phase portion 34e installed in this manner each form a lap winding having four turns and have a phase difference corresponding to an electrical angle of 72 degrees from each other.

Although not shown, a winding start end of the a-phase winding phase portion 34a and a winding finish end of the b-phase winding phase portion 34b are fixed to a mounting terminal of the rectifier 12 by a mounting screw, etc., so as to be electrically connected to a connection portion between a positive-side diode d₁ and a negative-side diode d₂ of the rectifier 12. Similarly, a winding start end of the b-phase winding phase portion 34b and a winding finish end of the c-phase winding phase portion 34c, a winding start end of the c-phase winding phase portion 34c and a winding finish end of the d-phase winding phase portion 34d, a winding start end of the d-phase winding phase portion 34d and a winding finish end of the e-phase winding phase portion 34e, and a winding start end of the e-phase winding phase portion 34e and a winding finish end of the a-phase winding phase portion 34a are each fixed to a mounting terminal of the rectifier 12 by a mounting screw, etc., so as to be electrically connected to a connection portion between a positive-side diode d₁ and a negative-side diode d₂ of the rectifier 12. Thus, an armature winding 16C is constructed in which the a-phase winding phase portion 34a, the b-phase winding phase portion 34b, the c-phase winding phase portion 34c, the d-phase winding phase portion 34d, and the e-phase winding phase portion 34e are connected into an annular shape (a ring connection) so as to have a phase difference corresponding to an electrical angle of 72 degrees from each other.

Moreover, except for the fact that the armature winding 16C is used instead of the armature winding 16, Embodiment 4 is constructed in a similar manner to Embodiment 1 above.

Consequently, because the armature winding 16C is constructed by connecting the a-phase winding phase portion 34a, the b-phase winding phase portion 34b, the c-phase winding phase portion 34c, the d-phase winding phase portion 34d, and the e-phase winding phase portion 34e into an annular shape so as to have a phase difference corresponding to an electrical angle of 72 degrees from each other, similar effects to those in Embodiment 1 above can also be achieved in Embodiment 4.

Now, in Embodiment 1 above, because the armature winding 16 is constructed by connecting five winding phase portions into an annular shape, circulating currents may arise due to fifth harmonic electromotive forces, reducing efficiency.

However, in Embodiment 4, because the conducting wire 30 is wound into pairs of slots 15a four slots apart and the number of slots per magnetic pole is five, this armature winding 16C is a short-pitch winding having a pitch of 4/5 pole, thereby enabling fifth harmonic electromotive forces to be canceled, reducing circulating currents and enabling a highly efficient dynamoelectric machine to be provided in which electromagnetic noise is reduced.

Moreover, in Embodiments 1 to 4 above, twenty slots 15a are formed relative to four magnetic poles in the rotor 7, but the magnetic poles and slots are not limited to these numbers provided that the number of magnetic poles is 2n and the number of slots is 10n (where n = 1, 2, 3, etc.)

### Embodiment 5

Figure 12 is a stator end elevation explaining a construction of an armature winding in a dynamoelectric machine according to Embodiment 5 of the present invention. Moreover, 1 to 20 in the figure indicate tooth numbers.

In Figure 12, a stator 8Ais constituted by: a cylindrical stator core 15 in which twenty slots 15a defined by teeth 15b are arranged in a circumferential direction at a uniform angular pitch; and an armature winding 16D formed by connecting five winding phase portions 35a to 35e into an annular shape.

A rotor 7A is constructed by disposing sixteen permanent magnets 40 functioning as field poles at a uniform angular pitch in a circumferential direction on an outer circumferential surface of a cylindrical base portion 41 composed of aluminum, for example. The permanent magnets 40 are magnetized alternately in a circumferential direction with North-seeking (N) poles and South-seeking (S) poles.

Thus, twenty slots 15a (or teeth 15b) are formed relative to sixteen field poles, making the number of slots per pole 1.25, the slots 15a (or teeth 15b) being arranged at a pitch corresponding to an electrical angle of 144 degrees.

Here, an a-phase winding phase portion 35a is constructed by winding a conducting wire 30 for four turns onto Tooth Number 1 of the teeth 15b, then winding the conducting wire 30 for four turns onto Tooth Number 6 of the teeth 15b, then winding the conducting wire 30 for four turns onto Tooth Number 11 of the teeth 15b, and finally winding the conducting wire 30 for four turns onto Tooth Number 16 of the teeth 15b.

A b-phase winding phase portion 35b is constructed by winding a conducting wire 30 for four turns onto Tooth Number 20 of the teeth 15b, then winding the conducting wire 30 for four turns onto Tooth Number 5 of the teeth 15b, then winding the conducting wire 30 for four turns onto Tooth Number 10 of the teeth 15b, and finally winding the conducting wire 30 for four turns onto Tooth Number 15 of the teeth 15b.

A c-phase winding phase portion 35c is constructed by winding a conducting wire 30 for four turns onto Tooth Number 19 of the teeth 15b, then winding the conducting wire 30 for four turns onto Tooth Number 4 of the teeth 15b, then winding the conducting wire 30 for four turns onto Tooth Number 9 of the teeth 15b, and finally winding the conducting wire 30 for four turns onto Tooth Number 14 of the teeth 15b.

A d-phase winding phase portion 35d is constructed by winding a conducting wire 30 for four turns onto Tooth Number 18 of the teeth 15b, then winding the conducting wire 30 for four turns onto Tooth Number 3 of the teeth 15b, then winding the conducting wire 30 for four turns onto Tooth Number 8 of the teeth 15b, and finally winding the conducting wire 30 for four turns onto Tooth Number 13 of the teeth 15b.

An e-phase winding phase portion 35e is constructed by winding a conducting wire 30 for four turns onto Tooth Number 17 of the teeth 15b, then winding the conducting wire 30 for four turns onto Tooth Number 2 of the teeth 15b, then winding the conducting wire 30 for four turns onto Tooth Number 7 of the teeth 15b, and finally winding the conducting wire 30 for four turns onto Tooth Number 12 of the teeth 15b.

Although not shown, a winding start end of the a-phase winding phase portion 35a and a winding finish end of the d-phase winding phase portion 35d are fixed to a mounting terminal of the rectifier 12 by a mounting screw, etc., so as to be electrically connected to a connection portion between a positive-side diode d₁ and a negative-side diode d₂ of the rectifier 12. Similarly, a winding start end of the b-phase winding phase portion 35b and a winding finish end of the e-phase winding phase portion 35e, a winding start end of the c-phase winding phase portion 35c and a winding finish end of the a-phase winding phase portion 35a, a winding start end of the d-phase winding phase portion 35d and a winding finish end of the b-phase winding phase portion 35b, and a winding start end of the e-phase winding phase portion 35e and a winding finish end of the c-phase winding phase portion 35c are each fixed to a mounting terminal of the rectifier 12 by a mounting screw, etc., so as to be electrically connected to a connection portion between a positive-side diode d₁ and a negative-side diode d₂ of the rectifier 12. Thus, the armature winding 16D is constructed in which the a-phase winding phase portion 35a, the b-phase winding phase portion 35b, the c-phase winding phase portion 35c, the d-phase winding phase portion 35d, and the e-phase winding phase portion 35e are connected into an annular shape (a ring connection) so as to have a phase difference corresponding to an electrical angle of 72 degrees from each other.

Moreover, except for the fact that the armature winding 16D is used instead of the armature winding 16 and the fact that the rotor 7A is used instead of the rotor 7, Embodiment 5 is constructed in a similar manner to Embodiment 1 above.

Consequently, because the armature winding 16D is constructed by connecting the a-phase winding phase portion 35a, the b-phase winding phase portion 35b, the c-phase winding phase portion 35c, the d-phase winding phase portion 35d, and the e-phase winding phase portion 35e into an annular shape so as to have a phase difference corresponding to an electrical angle of 72 degrees from each other, similar effects to those in Embodiment 1 above can also be achieved in Embodiment 5.

In Embodiment 5, because each winding phase portion is constructed by winding the conducting wire 30 onto every fifth tooth 15b without spanning between the teeth 15b and the number of slots per magnetic pole is 1.25, this armature winding 16D is a five-slot-per-four-pole concentrated winding, in other words, the winding pitch is a pitch of 4/5 pole, thereby enabling fifth harmonic electromotive forces to be canceled in a similar manner to Embodiment 4 above, reducing circulating currents and enabling a highly-efficient dynamoelectric machine to be provided in which electromagnetic noise is reduced.

Because the conducting wire 30 is wound onto every fifth tooth 15b without spanning between the teeth 15b, compared to the armature windings in Embodiments 1 to 4 above, in which the conducting wire 30 spans between the teeth 15b as it is wound into slot pairs separated by a predetermined number of slots, interference between each of the winding phase portions is reduced, enabling space factor to be improved, and axial expansion or height of the coil ends can be reduced, enabling increased output, reduced wind noise, and reductions in size.

Moreover, in Embodiment 5 above, a rotor 7A provided with permanent magnets 40 as field poles is used, but similar effects can also be achieved using the rotor 7 instead of the rotor 7A.

It also goes without saying that the rotor 7A may also be used instead of the rotor 7 in Embodiments 1 to 4 above.

Moreover, in Embodiment 5 above, twenty slots 15a are formed relative to sixteen magnetic poles in the rotor 7A, but the magnetic poles and slots are not limited to these numbers provided that the number of magnetic poles is 4n and the number of slots is 5n (where n = 1,2, 3, etc.) Embodiment 6

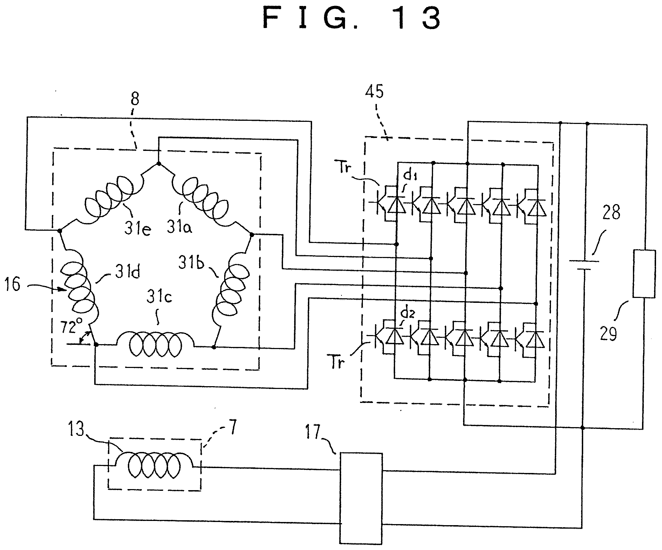

Figure 13 is a circuit diagram of a dynamoelectric machine according to Embodiment 6.

In Figure 13, a five-phase inverter 45 is constructed by connecting five diode pairs in parallel, each diode pair being composed of a positive-side diode d₁ and a negative-side diode d₂ connected in series, and connecting transistors Tr to each of the diodes d₁ and d₂, respectively, such that collector terminals are connected to positive sides of the diodes and emitter terminals are connected to negative sides of the diodes.

A winding start end of an a-phase winding phase portion 31a and a winding finish end of a b-phase winding phase portion 31b, a winding start end of the b-phase winding phase portion 31b and a winding finish end of a c-phase winding phase portion 31c, a winding start end of the c-phase winding phase portion 31c and a winding finish end of a d-phase winding phase portion 31d, a winding start end of the d-phase winding phase portion 31d and a winding finish end of a e-phase winding phase portion 31e, and a winding start end of the e-phase winding phase portion 31e and a winding finish end of the a-phase winding phase portion 31a are each fixed to a mounting terminal of the five-phase inverter 45 by a mounting screw, etc., so as to be electrically connected to a connection portion between a positive-side diode d₁ and a negative-side diode d₂ of the five-phase inverter 45.

Moreover, the rest of this embodiment is constructed in a similar manner to Embodiment 1 above.

A dynamoelectric machine according to Embodiment 6 operates as an alternator in a similar manner to Embodiment 1 above when all of the transistors Tr are switched off, the five-phase inverter 45 functioning as a five-phase full-wave rectifier.

By performing on-off control of the transistors Tr and supplying direct-current voltage from the storage battery 28 to the armature winding 16, the rotor 7 can be driven to rotate enabling the dynamoelectric machine according to Embodiment 6 to also operate as an electric motor.

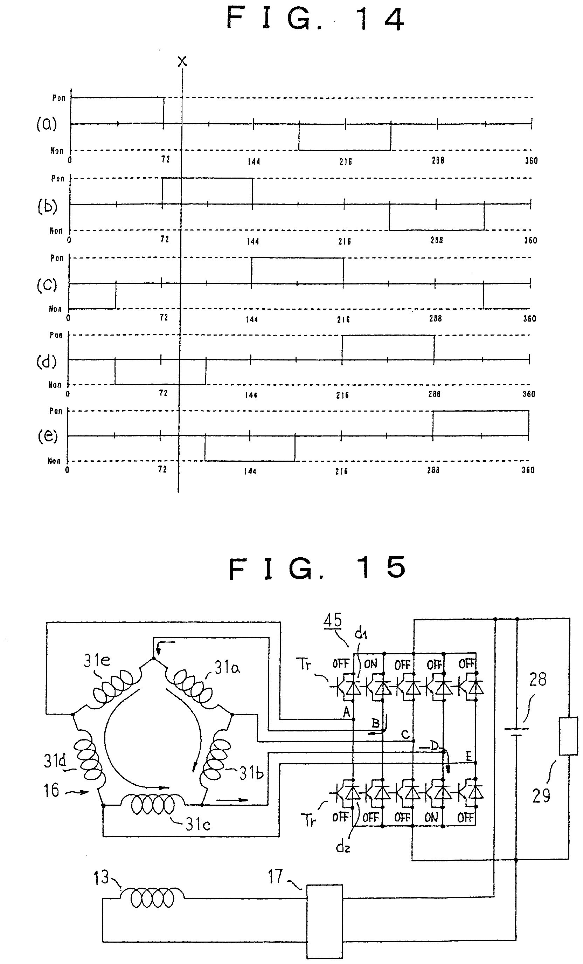

Next, a method for operating the dynamoelectric machine as an electric motor will be explained with reference to Figures 14 to 19.

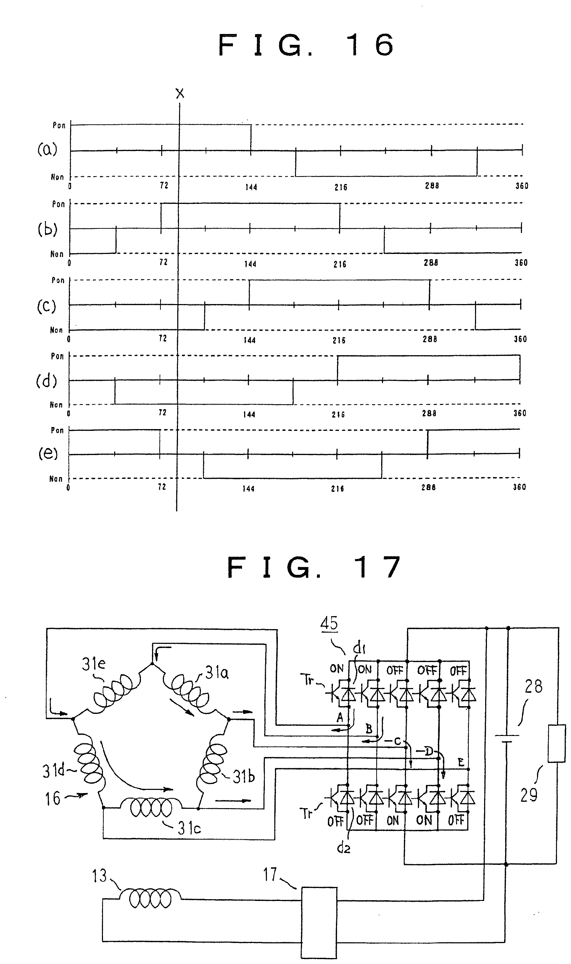

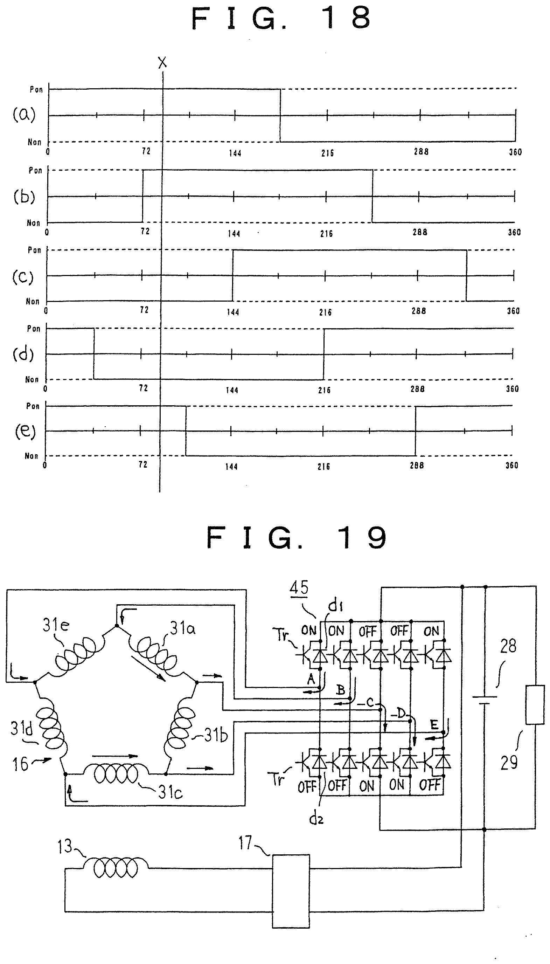

Figure 14 is a diagram showing timing of switching on and off of transistors in square wave operation having an energization angle of 72 degrees, Figure 15 is a diagram explaining flow of electric current through an armature winding of the dynamoelectric machine at time X in Figure 14, Figure 16 is a diagram showing timing of switching on and off of transistors in square wave operation having an energization angle of 144 degrees, Figure 17 is a diagram explaining flow of electric current through the armature winding of the dynamoelectric machine at time X in Figure 16, Figure 18 is a diagram showing timing of switching on and off of transistors in square wave operation having an energization angle of 180 degrees, and Figure 19 is a diagram explaining flow of electric current through the armature winding of the dynamoelectric machine at time X in Figure 18.

Moreover, in Figures 14, 16, and 18, (a) indicates timing of switching on and off of the transistors Tr connected to the positive-side diode d₁ and the negative-side diode d₂ on positive and negative sides of point A, (b) indicates timing of switching on and off of the transistors Tr connected to the positive-side diode d₁ and the negative-side diode d₂ on positive and negative sides of point B, (c) indicates timing of switching on and off of the transistors Tr connected to the positive-side diode d₁ and the negative-side diode d₂ on positive and negative sides of point C, (d) indicates timing of switching on and off of the transistors Tr connected to the positive-side diode d₁ and the negative-side diode d₂ on positive and negative sides of point D, and (e) indicates timing of switching on and off of the transistors Tr connected to the positive-side diode d₁ and the negative-side diode d₂ on positive and negative sides of point E. Pₒₙ indicates switching on of the positive-side transistors Tr connected to the positive-side diodes d₁, and Nₒₙ indicates switching on of the negative-side transistors Tr connected to the negative-side diodes d₂.

First, in square wave operation having an energization angle of 72 degrees, as shown in Figure 14, the five-phase inverter 45 is controlled such that the five positive-side transistors Tr are switched on sequentially for durations of 72 degrees so as to be offset by 72 degrees from each other, the five negative-side transistors Tr are switched on sequentially for durations of 72 degrees so as to be offset by 72 degrees from each other, and each negative-side transistor Tr is switched on so as to be offset by 180 degrees relative to the respective positive-side transistor Tr connected in series thereto. Each of the transistors Tr is controlled so as to be switched on for a duration of 72 degrees (72-degree energization) within each cycle (360 degrees).

In this square wave operation having an energization angle of 72 degrees, at any given time one of the positive-side transistors Tr and one of the negative-side transistors Tr are switched on, and the rest of the transistors Tr are switched off. At time X, for example, as indicated by arrows in Figure 15, electric current flows through two winding phase portions 31a and 31b connected in series and three winding phase portions 31c, 31d, and 31e connected in series.

Thus, electric current is passed corresponding to the maximum voltage that the electric motor can output, and at high-speed rotation, the maximum voltage (the fine voltage across the two winding phase portions 31a and 31b connected in series) exceeds the power supply voltage (the voltage of the storage battery 28), preventing electric current from flowing.

Next, in square wave operation having an energization angle of 144 degrees, as shown in Figure 16, the five-phase inverter 45 is controlled such that the five positive-side transistors Tr are switched on sequentially for durations of 144 degrees so as to be offset by 72 degrees from each other, the five negative-side transistors Tr are switched on sequentially for durations of 144 degrees so as to be offset by 72 degrees from each other, and each negative-side transistor Tr is switched on so as to be offset by 180 degrees relative to the respective positive-side transistor Tr connected in series thereto. Each of the transistors Tr is controlled so as to be switched on for a duration of 144 degrees (144-degree energization) within each cycle (360 degrees).

In this square wave operation having an energization angle of 72 degrees, at any given time two of the positive-side transistors Tr and two of the negative-side transistors Tr are switched on, and the rest of the transistors Tr are switched off. At time X, for example, as indicated by arrows in Figure 17, two of the winding phase portions 31b and 31e are short-circuited, and electric current flows through one winding phase portion 31a and two winding phase portions 31c and 31d connected in series.

Thus, when high-speed rotation is reached, even if the maximum voltage (the line voltage across the two winding phase portions 31c and 31d connected in series) exceeds the power supply voltage (the voltage of the storage battery 28), preventing electric current from flowing through the two winding phase portions 31c and 31d connected in series, electric current still flows through the single winding phase portion 31a because the electromotive force in that winding phase portion 31a is small. Consequently, the electric motor can operate up to and at high speeds.

In addition, in square wave operation having an energization angle of 180 degrees, as shown in Figure 18, the five-phase inverter 45 is controlled such that the five positive-side transistors Tr are switched on sequentially for durations of 180 degrees so as to be offset by 72 degrees from each other, the five negative-side transistors Tr are switched on sequentially for durations of 180 degrees so as to be offset by 72 degrees from each other, and each negative-side transistor Tr is switched on so as to be offset by 180 degrees relative to the respective positive-side transistor Tr connected in series thereto. Each of the transistors Tr is controlled so as to be switched on for a duration of 180 degrees (180-degree energization) within each cycle (360 degrees). Moreover, the energization angle is actually slightly less than 180 degrees to avoid short-circuiting the storage battery 28 during switching on and off of positive-side and the negative-side transistors Tr connected in series.

In this square wave operation having an energization angle of 180 degrees, at any given time the five-phase inverter 45 is in either of two states: a first state in which three of the positive-side transistors Tr and two of the negative-side transistors Tr are switched on, and the rest of the transistors Tr are switched off; and a second state in which two of the positive-side transistors Tr and three of the negative-side transistors Tr are switched on, and the rest of the transistors Tr are switched off. At time X, for example, as indicated by arrows in Figure 19, three of the winding phase portions 31b, 31d, and 31e are short-circuited, and electric current flows through two single winding phase portions 31a and 31c.

Thus, even if high-speed rotation is reached, electric current still flows through the single winding phase portions 31a and 31c because the electromotive force in those winding phase portions 31a and 31c is small. Consequently, the electric motor can operate up to and at high speeds.

Moreover, three of the winding phase portions are also short-circuited in the second state in which two of the positive-side transistors Tr and three of the negative-side transistors Tr are switched on, and the rest of the transistors Tr are switched off, giving a similar result.

Here, it has been shown that the electric motor can operate up to and at high speeds if the energization angle θ of the square wave operation is 144 degrees or 180 degrees, but similar effects can be achieved if the energization angle θ of the square wave operation is greater than 72 degrees and less than 180 degrees (72 degrees < θ < 180 degrees).

On the other hand, if the comparative five-phase star-connected armature winding 60 is used instead of the inventive armature winding 16, electric current always flows through two winding portions connected in series. Thus, when high-speed rotation is reached, the maximum voltage (the fine voltage across the two winding phase portions connected in series) exceeds the power supply voltage (the voltage of the storage battery 28), preventing electric current from flowing through the two winding phase portions connected in series. In other words, the electric motor cannot operate up to or at high speeds.

If a three-phase delta-connected armature winding is used instead of the inventive armature winding 16, electric current always flows through a single winding portion. Thus, since the electromotive force in the single winding phase portion is the maximum voltage, when high-speed rotation is reached, the maximum voltage (the fine voltage across the two winding phase portions connected in series) exceeds the power supply voltage (the voltage of the storage battery 28), preventing electric current from flowing. In other words, the electric motor cannot operate up to or at high speeds.

Thus, according to Embodiment 6, because the maximum electromotive force is the fine voltage across two winding phase portions connected in series, and single winding phase portions can be energized independently if the energization angle θ of the square wave operation is greater than 72 degrees and less than 180 degrees, a dynamoelectric machine is provided which is capable of being used as an electric motor-generator enabling motor operation up to and at high speeds and enabling power generation from low speeds.

Moreover, in each of the above embodiments, the armature windings are prepared using conducting wires 30 having a circular cross section, but the armature windings may also be prepared using conducting wires having a rectangular cross section. In that case, the space factor in the armature winding can be improved, and coil ends can be easily aligned in rows, and because the overall length of the windings is shortened by alignment of the coil ends in rows, lowering winding resistance, increased output is made possible. Furthermore, by aligning the coil ends in rows, ventilation resistance of coil end groups to cooling airflow blown from the internal fans is reduced, enabling wind noise to be reduced.

In the above embodiments, each of the winding phase portions is wound for four turns or eight turns, but the number of turns in each of the winding phase portions is not limited to these numbers and may be appropriately set to match desired specifications.

In Embodiment 6 above, the armature winding 16 is explained as being used, but similar effects are also exhibited if the armature windings 16A, 16B, 16C, and 16D are used instead of the armature winding 16.

In each of the above embodiments, the two winding start ends and winding finish ends of each pair of winding phase portions having a phase difference corresponding to an electrical angle of 72 degrees from each other are explained as being fixed as output wires to the mounting terminals of the rectifier or the five-phase inverter by mounting screws, etc., but the winding start ends and winding finish ends of the pairs of winding phase portions having a phase difference corresponding to an electrical angle of 72 degrees from each other may also be joined together by soldering at the stage of assembling the stator, one of either the winding start end or the winding finish end of the pair of winding phase portions having a phase difference corresponding to an electrical angle of 72 degrees from each other being fixed as an output wire to the mounting terminal of the rectifier or the five-phase inverter by a mounting screw, etc.

The present invention is constructed in the above manner and exhibits the effects described below.

As explained above, according to one aspect, there is provided a dynamoelectric machine including:
a stator core in which a predetermined number of slots defined by adjacent pairs of teeth are arranged in a circumferential direction;
an armature winding installed in the stator core;
a predetermined number of field poles; and
a rectifier for rectifying alternating-current output induced in the armature winding in response to a rotating magnetic field rotating in synchrony with rotation of an internal combustion engine,
the dynamoelectric machine charging a storage battery using the rectified output from the rectifier,
wherein the armature winding is constructed by connecting five winding phase portions into an annular shape such that electrical angular phases of electromotive force differ from each other by approximately 72 degrees, and the rectifier is constituted by a five-phase full-wave rectifier,
thereby providing a dynamoelectric machine operating as a generator enabling electric power generation to be increased while maintaining a low rectified ripple voltage, and enabling assembly of a stator to be improved and deterioration of cooling and worsening of wind noise to be suppressed while making a neutral point unnecessary.

According to another aspect, there is provided a dynamoelectric machine including:
a stator core in which a predetermined number of slots defined by adjacent pairs of teeth are arranged in a circumferential direction;
an armature winding installed in the stator core;
a predetermined number of field poles; and
a five-phase inverter for supplying a five-phase alternating voltage to the armature winding from a direct-current power source,
wherein the armature winding is constructed by connecting five winding phase portions into an annular shape such that electrical angular phases of electromotive force differ from each other by approximately 72 degrees,
thereby providing a dynamoelectric machine operating as an electric motor-generator enabling electric power generation to be increased while maintaining a low rectified ripple voltage, enabling assembly of a stator to be improved and deterioration of cooling and worsening of wind noise to be suppressed while making a neutral point unnecessary, and in addition enabling motor operation up to and at high speeds.

A winding pitch between each of the five winding phase portions may be 4/5 of a pitch between the field poles, enabling circulating currents to be reduced, thereby enabling efficiency to be improved.

The predetermined number of field poles is 4n, the predetermined number of slots is 5n, where n is a positive integer, and the five winding phase portions may be wound onto the teeth so as not to span the slots, enabling circulating currents to be reduced and increasing space factor, thereby enabling efficiency to be improved, and also enabling coil ends to be reduced, thereby enabling reductions in size.

## Claims

1. A dynamoelectric machine comprising:
a stator core (15) in which a predetermined number of slots (15b) defined by adjacent pairs of teeth (15a) are arranged in a circumferential direction;
an armature winding (16, 16A, 16B, 16C, 16D) installed in said stator core (15); a predetermined number of field poles (22, 23, 40); and
a rectifier (12) for rectifying alternating-current output induced in said armature winding in response to a rotating magnetic field rotating in synchrony with rotation of an internal combustion engine,
said dynamoelectric machine being adpated to charge a storage battery (28) using said rectified output from said rectifier (12),
wherein said armature winding (16, 16A, 16B, 16C, 16D) is constructed by connecting five winding phase portions (31a-31e, 32a-32e, 33a-33e, 34a-34e, 35a-35e) into an annular shape such that electrical angular phases of electromotive force differ from each other by approximately 72 degrees,
said rectifier (12) is constituted by a five-phase full-wave rectifier, said predetermined number of field poles (22, 23, 40) is 4n, and said predetermined number of slots (15b) is 5n, where n is a positive integer; and
said five winding phase portions (35a-35e) are wound onto said teeth (15a) so as not to span said slots (15b).

2. A dynamoelectric machine comprising:
a stator core (15) in which a predetermined number of slots (15b) defined by adjacent pairs of teeth (15a) are arranged in a circumferential direction;
an armature winding (16, 16A, 16B, 16C, 16D) installed in said stator core (15); a predetermined number of field poles (22, 23, 40); and
a five-phase inverter (45) for supplying a five-phase alternating voltage to said armature winding from a direct-current power source (28),
wherein said armature winding (16, 16A, 16B, 16C, 16D) is constructed by connecting five winding phase portions (31a-31e, 32a-32e, 33a-33e, 34a-34e, 35a-35e) into an annular shape such that electrical angular phases of electromotive force differ from each other by approximately 72 degrees, said predetermined number of field poles (22, 23, 40) is 4n, and said predetermined number of slots (15b) is 5n, where n is a positive integer; and
said five winding phase portions (35a-35e) are wound onto said teeth (15a) so as not to span said slots (15b).

## Patentansprüche

1. Dynamoelektrische Maschine, aufweisend:
einen Statorkern (15), in dem eine vorbestimmte Anzahl Schlitze (15b), die durch benachbarte Paare von Zähnen (15a) definiert sind, in einer Umfangsrichtung angeordnet sind;
eine Ankerwicklung (16, 16A, 16B, 16C, 16D), die in dem Statorkern (15) eingebaut ist;
eine vorbestimmte Anzahl Feldpole (22, 23, 40); und
einen Gleichrichter (12), um eine Wechselstromausgabe gleichzurichten, die in der Ankerwicklung als Antwort auf ein sich drehendes, magnetisches Feld induziert ist, das sich synchron mit Drehung eines Verbrennungsmotors dreht,
wobei die dynamoelektrische Maschine dazu eingerichtet ist, eine Speicherbatterie (28) unter Verwendung der gleichgerichteten Ausgabe von dem Gleichrichter (12) zu laden,
wobei die Ankerwicklung (16, 16A, 16B, 16C, 16D) dadurch ausgebildet ist, dass fünf Phasenwindungsabschnitte (31a-31e, 32a-32e, 33a-33e, 34a-34e, 35a-35e) derart in eine ringförmige Gestalt verbunden werden, dass sich elektrische Phasenwinkel elektromotorischer Kraft voneinander um ungefähr 72 Grad unterscheiden,
der Gleichrichter (12) durch einen fünf-Phasen Vollwellengleichrichter gebildet wird, die vorbestimmte Anzahl Feldpole (22, 23, 40) 4n ist, und die vorbestimmte Anzahl Schlitze (15b) 5n ist, wobei n eine positive Ganzzahl ist; und
die fünf Phasenwindungsabschnitte (35a-35e) so auf die Zähne (15a) gewickelt sind, dass sie die Schlitze (15b) nicht überspannen.

2. Dynamoelektrische Maschine, aufweisend:
einen Statorkern (15), in dem eine vorbestimmte Anzahl Schlitze (15b), die durch benachbarte Paare von Zähnen (15a) definiert sind, in einer Umfangsrichtung angeordnet sind;
eine Ankerwicklung (16, 16A, 16B, 16C, 16D), die in dem Statorkern (15) eingebaut ist;
eine vorbestimmte Anzahl Feldpole (22, 23, 40); und
einen fünf-Phasen Inverter (45), um der Ankerwicklung eine fünf-Phasen Wechselspannung von einer Gleichstrom-Energiequelle (28) zuzuführen,
wobei die Ankerwicklung (16, 16A, 16B, 16C, 16D) dadurch ausgebildet ist, dass fünf Phasenwindungsabschnitte (31a-31e, 32a-32e, 33a-33e, 34a-34e, 35a-35e) derart in eine ringförmige Gestalt verbunden werden, dass sich elektrische Phasenwinkel elektromotorischer Kraft voneinander um ungefähr 72 Grad unterscheiden, die vorbestimmte Anzahl Feldpole (22, 23, 40) 4n ist, und die vorbestimmte Anzahl Schlitze (15b) 5n ist, wobei n eine positive Ganzzahl ist; und
die fünf Phasenwindungsabschnitte (35a-35e) so auf die Zähne (15a) gewickelt sind, dass sie die Schlitze (15b) nicht überspannen.

## Revendications

1. Machine dynamo-électrique comprenant :
un noyau de stator (15) dans lequel un nombre prédéterminé de fentes (15b) définies par des paires de dents adjacentes (15a) est agencé dans une direction circonférentielle ;
un enroulement d'induit (16, 16A, 16B, 16C, 16D) installé dans ledit noyau de stator (15) ;
un nombre prédéterminé de pôles de champ (22, 23, 40) ; et
un redresseur (12) pour redresser la sortie de courant alternatif induite dans ledit enroulement d'induit en réponse à un champ magnétique tournant qui tourne en synchronisme avec la rotation d'un moteur à combustion interne ;
ladite machine dynamo-électrique étant adaptée à charger une batterie de stockage (28) en utilisant ladite sortie redressée provenant dudit redresseur (12) ;
dans laquelle ledit enroulement d'induit (16, 16A, 16B, 16C, 16D) est construit en reliant cinq parties de phase d'enroulement (31a-31e, 32a-32e, 33a-33e, 34a-34e, 35a-35e) en une forme annulaire telle que les phases électriques angulaires de la force électromotrice diffèrent les unes des autres d'environ 72 degrés ;
ledit redresseur (12) est constitué d'un redresseur pleine onde à cinq phases, ledit nombre prédéterminé de pôles de champ (22, 23, 40) est 4n, et ledit nombre prédéterminé de fentes (15b) est 5n, où n est un nombre entier positif; et
lesdites cinq parties de phase d'enroulement (35a-35e) sont enroulées sur lesdites dents (15a) de manière à ne pas s'étendre sur lesdites fentes (15b).

2. Machine dynamo-électrique comprenant :
un noyau de stator (15) dans lequel un nombre prédéterminé de fentes (15b) définies par des paires de dents adjacentes (15a) est agencé dans une direction circonférentielle ;
un enroulement d'induit (16, 16A, 16B, 16C, 16D) installé dans ledit noyau de stator (15) ;
un nombre prédéterminé de pôles de champ (22, 23, 40) ; et
un inverseur à cinq phases (45) pour fournir une tension alternative à cinq phases audit enroulement d'induit à partir d'une source d'énergie à courant continu (28) ;
dans laquelle ledit enroulement d'induit (16, 16A, 16B, 16C, 16D) est construit en reliant cinq parties de phase d'enroulement (31a-31e, 32a-32e, 33a-33e, 34a-34e, 35a-35e) en une forme annulaire de sorte que les phases angulaires électriques de la force électromotrice diffèrent d'environ 72 degrés, ledit nombre prédéterminé de pôles de champ (22, 23, 40) est 4n, et ledit nombre prédéterminé de fentes (15b) est 5n, où n est un nombre entier positif ; et
lesdites cinq parties de phase d'enroulement (35a-35e) sont enroulées sur lesdites dents (15a) de manière à ne pas s'étendre sur lesdites fentes (15b).
